# EUROPÄISCHE PATENTANMELDUNG

(11) **EP 0 599 193 A1**
(43) Veröffentlichungstag der Anmeldung: **01.06.1994**
(21) Anmeldenummer: 93118559.9
(22) Anmeldetag: 18.11.1993
(51) Int. Cl.: B01J 37/02

(54) **Verfahren und Vorrichtung zur gleichmässigen und reproduzierbaren Schalenimprägnierung von als Schüttgut vorliegenden Festbett-Katalysatorträgern**

(30) Priorität: 27.11.1992 DE 4239876
(71) Anmelder: Degussa Aktiengesellschaft, D-60311 Frankfurt (DE)
(72) Erfinder: Burmeister, Roland, Dr., D-63826 Geiselbach (DE); Deller, Klaus, Dr., D-63512 Hainburg (DE); Despeyroux, Bertrand, Dr., F-78112 Fourqueux (FR)

(57) **Zusammenfassung**

Gegenstand der Erfindung ist ein Verfahren zur gleichmäßigen und reproduzierbaren Schalenimprägnierung von als Schüttgut vorliegenden Festbett-Katalysatorträgern durch Aufbringen von in Tröpfchen zerteilten Imprägnierlösungen von katalytisch aktiven Komponenten auf die in einem Kessel umgewälzten Katalysatorträger. Durch geeignete Wahl der Sprühparameter, insbesondere des Tropfenspektrums, der Lösungsmittelmenge und der pro Kesselumdrehung versprühten Menge an Imprägnierlösung können die Katalysatorträger mit hervorragend gleichmäßigen Schalen versehen werden.

## Beschreibung

Die vorliegende Erfindung betrifft ein Verfahren und eine Vorrichtung zur gleichmäßigen und reproduzierbaren Imprägnierung von als Schüttgut vorliegenden Festbett-Katalysatorträgern mit einem vorgebbaren Schalenvolumen durch Aufbringen von in Tröpfchen zerteilten Imprägnierlösungen von Vorstufen der katalytisch aktiven Komponenten auf die in einem Kessel umgewälzten Katalysatorträger.

Schüttgutkatalysatoren werden für unterschiedliche katalytische Prozesse eingesetzt. Dabei kommen Katalysatorträger in Form von Strangpreßlingen, Granulaten oder Pellets zum Einsatz. Ihre geometrischen Abmessungen liegen im Bereich von 1 bis 10 mm. Für die Aufnahme der katalytisch aktiven Komponenten weisen sie ein hohes Porenvolumen - in der Regel 0,5 bis 2 ml/g - und eine große spezifische Oberfläche (BET-Oberfläche bestimmt durch Stickstoffadsorption nach DIN 66132) auf. Je nach katalytischem Prozeß werden homogene, ring- oder schalenförmige Verteilungen der katalytisch aktiven Komponenten über den Querschnitt der Katalysatorträger gefordert.

Ring- oder schalenförmig imprägnierte Katalysatoren werden für selektive Prozesse benötigt, bei denen ein verlängerter Kontakt der Reaktanden im Innern des Trägers in Gegenwart des Katalysators zu unerwünschten Nebenreaktionen führen würde. Ein typisches Beispiel hierfür ist die Vinylacetatsynthese.

Als Katalysatorträger werden zumeist hochoberflächige oxidische Materialien wie zum Beispiel Siliziumoxid, Aluminiumoxide verschiedener kristallografischer Modifikationen, Titanoxid in Anatas- und/oder Rutilmodifikation, Zirkonoxid, Zeolithe sowie kohlenstoffhaltige Pellets allein oder in Abmischungen eingesetzt. Dabei können die oxidischen Trägermaterialien zur Erhöhung ihrer Temperaturstabilität zum Beispiel durch Dotierung mit Seltenerdoxiden gitterstabilisiert sein. Je nach geforderter katalytischer Funktion werden diese Materialien mit Unedelmetallkomponenten (z. B. Nickel, Kupfer oder Eisen), Edelmetallkomponenten (z. B. Platin, Palladium oder Rhodium) oder Kombinationen dieser Komponenten imprägniert. Dafür werden Vorstufen dieser aktiven Komponenten in Form von Chloriden oder Nitraten eingesetzt.

Für die Imprägnierung der Katalysatorträger sind Flutverfahren, die Incipient Wetness-Methode sowie Sprühverfahren mit und ohne Vorbelegung bekannt. Diese Verfahren sind unterschiedlich gut für die verschiedenen Verteilungsprofile geeignet.

Die Verteilung der katalytisch aktiven Komponenten über den Querschnitt der Katalysatorträger hängt vom gewählten Imprägnierprozeß ab. Außerdem werden die sich einstellenden Diffusionsprofile der aktiven Komponenten durch chromatographische Effekte beeinflußt, d. h. sie hängen von der Wahl des Trägers sowie der Art der jeweiligen Vorstufen der katalytisch aktiven Komponenten und dem verwendeten Lösungsmittel ab. Bei gleichen Trägern erhält man je nach Vorstufe (z. B. Chloride oder Nitrate) unterschiedliche Diffusionsprofile für ein und dieselbe katalytische Komponente. Die Diffusionsprofile können weiterhin wie in der DE-PS 25 31 770 beschrieben durch eine Vorbelegung mit verschiedenen organischen Flüssigkeiten beeinflußt werden.

Wesentlich für das endgültig sich einstellende Profil ist auch der Zeitpunkt der Fixierung der katalytisch aktiven Komponenten durch Trocknung und Kalzinierung des imprägnierten Trägers oder Reduktion der Vorstufen der katalytischen Komponenten. Je kürzer der Abstand zwischen Imprägnierung und Fixierung ist, umso mehr werden die katalytischen Komponenten in Form einer Schale in Oberflächennähe fixiert.

Beim Flutverfahren werden die Katalysatortärger in einen Überschuß von Imprägnierlösung getaucht, nach einer gewissen Imprägnierdauer aus der Lösung herausgenommen, getrocknet und eventuell aktiviert. Die Katalysatorvorstufen diffundieren bei dieser Art der Imprägnierung tief in den Katalysatorträger hinein. Je nach Dauer der Imprägnierung erhält man abhängig von der Kombination Trägermaterial/katalytische Vorstufe eine mehr oder weniger homogene Verteilung der katalytisch aktiven Komponenten auf dem Träger. Dies bedeutet für Prozesse, bei denen die katalytische Umsetzung im wesentlichen an der Oberfläche der Katalysatorträger abläuft eine Vergeudung von wertvollem katalytisch aktivem Material in der Tiefe der Katalysatorträger. Überdies kann es zu unerwünschten Nebenreaktionen kommen, wenn die Reaktanden durch Diffusion in die Katalysatorträger hinein längere Zeit mit den katalytisch aktiven Komponenten in Kontakt kommen, bevor sie wieder aus den Trägern hinausdiffundieren.

Die von einem individuellen Trägerteilchen aufgenommene Menge der Imprägnierlösung hängt beim Flutverfahren von der individuellen Aufnahmekapazität eines jeden Trägerteilchens ab. Da die Aufnahmekapazität der Trägerteilchen selbst bei einer Massenfertigung dieser Träger von Teilchen zu Teilchen Schwankungen unterworfen ist, weisen die Trägerteilchen zwangsläufig unterschiedliche Beladungen mit den katalytisch aktiven Komponenten auf.

Bei der incipient wetness Methode wird zunächst die maximale Aufnahmekapazität der Katalysatorträger für die Imprägnierflüssigkeit bestimmt. Dann werden die löslichen Vorstufen der Katalysatorkomponenten in einer Menge Imprägnierflüssigkeit gelöst, die 80 bis 95 % der Aufnahmekapazität der vorgelegten Menge Katalysatorträger entspricht. Die Menge der gelösten Katalysatorkomponenten wird auf die gewünschte Beladung der vorgelegten Menge Katalysatorträger mit den katalytisch aktiven Komponenten abgestimmt. Die Imprägnierlösung wird möglichst gleichmäßig über die in einem Dragierkessel umgewälzten Katalysatorträger verteilt. Durch diese Vorgehensweise ist gesichert, daß die Katalysatorträger mit der vorgesehenen Menge an aktiven Komponenten belegt werden. Dies gilt jedoch nur gemittelt über eine große Zahl der Träger. Die Beladung der einzelen Trägerteilchen kann jedoch wie schon beim Flutverfahren von Teilchen zu Teilchen wegen der unterschiedlichen Aufnahmekapazität verschieden sein.

Bei der Sprühimprägnierung wird eine bestimmte Menge Imprägnierlösung über die in einem Kessel umgewälzten Katalysatorträger mit Ein- oder Zweistoffdüsen versprüht. Das Sprühverfahren ist besonders für die Produktion von Katalysatoren im größeren Maßstab geeignet. Mit dem Sprühverfahren können die Katalysatorträger gleichermaßen gut chargenweise als auch in einem kontinuierlichen Prozeß imprägniert werden. Allerdings war es auch mit diesem Verfahren bisher nicht möglich, Schalenkatalysatoren mit großer Gleichmäßigkeit herzustellen. Insbesondere ist bei diesem Verfahren auch eine Inhomogenität der Imprägnierung über die Oberfläche eines einzelnen Katalysatorträgers zu beobachten.

Es ist deshalb Aufgabe der Erfindung, ein verbessertes Sprühverfahren anzugeben, das die Herstellung von Schalenkatalysatoren mit hoher Gleichmäßigkeit und vorgebbarem Schalenvolumen ohne Vorbelegung des Trägers gestattet.

Diese Aufgabe wird durch ein Verfahren zur gleichmäßigen und reproduzierbaren Schalenimprägnierung von als Schüttgut vorliegenden Festbett-Katalysatorträgern mit einem vorgebbaren Schalenvolumen durch Aufbringen von in Tröpfchen zerteilten Imprägnierlösungen von Vorstufen der katalytisch aktiven Komponenten auf die in einem Kessel umgewälzten Katalysatorträger gelöst.

Das Verfahren ist dadurch gekennzeichnet, daß die für die gewünschte Beladung der Katalysatorträger benötigte Menge an Vorstufen der katalytisch aktiven Komponenten in einem Volumen des Lösungsmittels gelöst werden, das 30 bis 100 % der Lösungsmittel-Aufnahmekapazität entspricht, welches von dem vorgegebenen Schalenvolumen zur Verfügung gestellt wird und daß 0,01 bis 2 % dieser Imprägnierlösung pro Umdrehung des Kessels in Tröpfchen mit einem mittleren Durchmesser von 10 bis 90 µm, bevorzugt 10 - 30 µm, zerteilt, drucklos und ohne Trägergas über mindestens 10 % der Oberfläche des Schüttgutes aufgebracht werden.

Bei bestimmten Kombinationen von Trägermaterialien, katalytischen Vorstufen und Lösungsmitteln muß unmittelbar nach dem Imprägnieren die weitere Diffusion der katalytischen Komponenten durch eine Fixierung verhindert werden. Dies kann durch Trocknung und gegebenenfalls Reduktion der katalytischen Komponenten geschehen.

Die Schalendicke wird erfindungsgemäß durch das Volumen des Lösungsmittels festgelegt, das von dem gewünschten Schalenvolumen infolge seiner Porosität aufgenommen werden kann. Diese Lösungsmittel-Aufnahmekapazität ist im allgemeinen nicht identisch mit dem Porenvolumen des Trägermaterials. Das Porenvolumen setzt sich aus dem Volumen von Mikro-, Meso- und Makroporen zusammen. Die Bestimmung der Mikro- und Mesoporen erfolgt durch Aufnahme der N₂-Isotherme und deren Auswertung nach BET, (DIN 66132). Die Bestimmung der Makroporen erfolgt durch das Quecksilber-Einpreßverfahren.

Die Lösungsmittel-Aufnahmekapazität hängt dagegen im Einzelfall von der jeweiligen Kombination Lösungsmittel/Trägermaterial ab und muß gesondert bestimmt werden. Dies geschieht in einfacher weise, indem man das Trägermaterial in einem Glas bei Zimmertemperatur so lange Lösungsmittel aufnehmen läßt, bis keine Luftblasen mehr aufsteigen. Anschließend wird das Trägermaterial aus dem Lösungsmittel entnommen, an der Oberfläche mit Papier abgetrocknet und gewogen. Aus der Differenz zwischen dem Gewicht vor und nach der Lösungsmittelabsorption ergibt sich die Menge des absorbierten Lösungsmittels und damit die gesuchte Lösungsmittel-Aufnahmekapazität.

Im Falle von Tabletten aus pyrogenem Siliziumdioxid entsprechend DE 39 12 504 ist das Porenvolumen in etwa gleich der Aufnahmekapazität der Tabletten für Wasser.

Das für die Einstellung der gewünschten Schalendicke anzuwendende Volumen an Lösungsmittel ist gewöhnlich geringer als es der Lösungsmittel-Aufnahmekapazität entspricht. Das erfindungsgemäß einzusetzende Volumen des Lösungsmittels liegt zwischen 30 und 100 % der Aufnahmekapazität der Schale.

Die Ursache hierfür liegt in den schon beschriebenen chromatografischen Effekten. Das tatsächliche Volumen an Lösungsmittel für die Einstellung einer bestimmten Schalendicke muß daher für die jeweilige Kombination Katalysatorvorstufe/Lösungsmittel/Trägermaterial durch Vorversuche ermittelt werden.

Erfindungsgemäß wird die Imprägnierlösung durch geeignete Verdüsungseinrichtungen in Tröpfchen mit mittleren Tropfendurchmessern von 10 bis 90 µm, bevorzugt 10 - 30 µm, Durchmesser zerteilt. Die Verdüsungseinrichtungen müssen ein stets gleichbleibendes, enges Tropfenspektrum gewährleisten, wobei mindestens 60, bevorzugt 80 %, des gesamten Volumenstroms sich auf Tröpfchen mit Durchmessern verteilen sollten, die nicht größer als das Doppelte des mittleren arithmetischen Tropfendurchmessers sind.

Diese geringen Tropfendurchmesser und das enge Tropfenspektrum führen dazu, daß sich die Imprägnierung eines Trägers aus sehr vielen, stets gleichen Einzellmprägnierungen zusammensetzt. Dadurch wird eine inhomogene Imprägnierung über die Oberfläche eines einzelnen Katalysatorträgers, wie sie aus dem Stand der Technik bei Verwendung größerer Tropfendurchmesser mit breiterem Tropfenspektrum bekannt ist, vermieden. Gleichzeitig wird der Massenstrom der zu verdüsenden Imprägnierflüssigkeit so niedrig eingestellt, daß pro Umdrehung des Imprägnierkessels nur etwa 0,01 bis 2 % der gesamten Imprägnierlösung versprüht wird. Diese Maßgabe garantiert, daß während der gesamten Imprägnierdauer das Schüttgut genügend oft umgewälzt und jeder Katalysatorträger mit derselben Menge Imprägnierlösung beaufschlagt wird.

Mit dem erfindungsgemäßen Verfahren können definierte Schalenkatalysatoren auch bei Materialkombinationen (Trägermaterial, Vorstufen, Lösungsmittel) hergestellt werden, bei denen dies mit den bisherigen Verfahren aufgrund eines ungenügenden Chromatographie-Effektes nicht möglich war.

Ein weiterer wesentlicher Punkt des erfindungsgemäßen Verfahrens ist die Tatsache, daß die Tröpfchen drucklos und ohne Trägergas über mindestens 10 % der Oberfläche des Schüttgutes aufgebracht werden.

Die Verwendung eines Trägergases würde aufgrund der drucklosen Verteilung und der geringen Masse der Flüssigkeitströpfchen auch bei geschlossenen Imprägniergefäßen zu einem unkontrollierten Austragen von Imprägnierlösung durch die notwendigerweise vorhandenen Abluftstutzen und damit zu unkontrollierten Verlusten von katalytisch aktiven Komponenten führen.

Die Vorgabe, daß mindestens 10 % der Oberfläche des Schüttgutes besprüht werden soll, stellt zusammen mit der Vorgabe für das pro Umdrehung des Imprägniergefäßes versprühten Volumens sicher, daß alle Katalysatorträger gleichmäßig mit katalytischen Komponenten belegt werden.

Bei Anwendung des erfindungsgemäßen Verfahrens werden längere Imprägnierzeiten als bisher für das Imprägnieren von Katalysatorträgern benötigt. Dieser Nachteil wird jedoch bei weitem durch die überragende Qualität der nach diesem Verfahren hergestellten Katalysatoren aufgewogen. Überdies ermöglicht dieses Verfahren auch die Herstellung von Schalenkatalysatoren für Materialkombinationen, für die bisher komplizierte Vorbelegungsverfahren notwendig waren (siehe DE-PS 25 31 770), um Schalen zu erzeugen.

Wichtig für das erfindungsgemäße Verfahren ist eine richtige Abstimmung der einzelnen Maßnahmen aufeinander. Sie richtet sich nach der Chargengröße, der Art des Imprägniergefäßes (z. B. Imprägnierkessel, Doppelkonusmischer), der Versprüheinrichtung und den Eigenschaften von Katalysatorträgern, katalytischen Vorstufen und Lösungsmittel. Diese Abstimmung kann jedoch von jedem Fachmann nach einigen Vorversuchen aufgrund der erfindungsgemäßen Lehre vorgenommen werden.

Das erfindungsgemäße Verfahren ist gleichermaßen gut für das Imprägnieren mit wäßrigen oder organischen Lösungsmitteln geeignet. Bei Verwendung von leicht flüchtigen Lösungsmitteln kann es vorteilhaft sein, wenn der Imprägniervorgang unter einer gesättigten Atmosphäre des Lösungsmittels im Temperaturbereich von 30 bis 10° C unterhalb seines Siedepunktes durchgeführt wird. Die feinen Lösungsmitteltröpfchen neigen aufgrund ihrer großen Oberfläche zu einer starken Verdunstung, so daß bei Fehlen einer gesättigten Atmosphäre eine unerwünschte Sprühtrocknung eintreten würde.

Für die Zerteilung der Imprägnierlösungen in kleine Tröpfchen haben sich besonders Ultraschall-Düsen als geeignet erwiesen. Sie erzeugen ohne Hilfe eines Trägergases Tröpfchen im gewünschten Durchmesserbereich mit einem engen Tropfenspektrum und erlauben eine sehr feine Regelung des Massenstromes. Natürlich sind auch andere Sprüheinrichtungen geeignet, die ohne Trägergaszufuhr das geforderte Tröpfchenspektrum bei gleichzeitig guter Regelbarkeit des Massenstromes erzeugen können.

Ein weiterer Gegenstand der Erfindung ist eine Vorrichtung zur Durchführung des vorstehend beschriebenen Verfahrens.

Die Vorrichtung enthält ein drehbares Mischgefäß mit Drehzahlregelung zur Aufnahme und zum Umwälzen des als Schüttgut vorliegenden Trägermaterials, wobei das Mischgefäß sich in einer gasdicht abschließbaren Ummantelung befindet oder selbst gasdicht verschließar ist und eine oder mehrere Ultraschall-Sprühdüsen aufweist, deren Sprühwinkel und Abstand relativ zur Oberfläche des umwälzenden Schüttgutes einstellbar sind. Weiterhin enthält die Vorrichtung kühl - oder beheizbare Flüssigkeitskreisläufe, Temperaturmeßfühler und Temperaturregelkreise zum Temperieren des Schüttgutes und der sich einstellenden gesättigten Lösungsmittel-Atmosphäre in einem Temperaturbereich zwichen 10 und 250° C, sowie temperierte Zuführungen für die Imprägnierlösungen zu den Ultraschall-Sprühdüsen und Durchflußregler zur Regelung des Massenstromes der Imprägnierlösung und verschließbare Gaszuführungen für Spülgase.

Die Erfindung wird nun anhand einiger Beispiele näher erläutert. Es zeigen
- Figur 1a:: Querschnitte durch mit Palladium imprägnierte Aerosil-Träger (pyrogenes SiO₂ von Degussa); Beispiel 1
- Figur 1b:: Querschnitte durch mit Palladium imprägnierte Aerosll-Träger; Vergleichsbeispiel 1
- Figur 2a:: Querschnitte durch mit Platin imprägnierte Aerosil-Träger; Beispiel 2
- Figur 2b:: Querschnitte durch mit Platin imprägnierte Aerosil-Träger; Vergleichsbeispiel 2
- Figur 3a:: Querschnitte durch mit Nickel imprägnierte Aerosil-Träger; Beispiel 3
- Figur 3b:: Querschnitte durch mit Nickel imprägnierte Aerosil-Träger, Vergleichsbeispiel 3

### Sprühapparatur

Die Sprühapparatur bestand aus einem Imprägnierkessel von 300 mm Durchmesser (Volumen 9,5 l) in einem mit Wasser temperierbaren Doppelmantel-Gehäuse. Imprägnierkessel und Gehäuse waren zum Korrosionsschutz mit Teflon beschichtet.

Der Imprägnierkessel konnte mittels eines drehzahlgeregelten Motors mit Drehzahlen zwischen 5 und 150 min⁻¹ angetrieben werden. Bei den Imprägnierungen der folgenden Beispiele wurde mit einer Drehzahl von 22 min⁻¹ gearbeitet. Zur guten Durchmischung der Katalysatorträger war die Drehachse des Imprägnierkessels um 65^{o} C gegenüber der Vertikalen geneigt.

Zur Versprühung der Imprägnierlösungen wurde eine kommerziell erhältliche Sprühdüse mit Ultraschallzerstäubung (Frequenz des Schwingers: 100 KHz, Durchsatz: 0 bis 2 l/h) ohne Trägergas verwendet. Diese Sprühdüse erzeugt ein Tropfenspektrum mit einem mittleren Durchmesser von etwa 25 µm. 97 % des gesamten Volumenstroms verteilen sich auf Tropfen mit Durchmessern kleiner als das Doppelte des mittleren Tropfendurchmessers.

Nach dem Befüllen des Imprägnierkessels mit den Katalysatorträgern und Verschließen des Doppelmantelgehäuses wurde die Apparatur zunächst mit Stickstoff gespült, bevor mit den eigentlichen Imprägnierungen begonnen wurde.

### Beispiel 1: Schalenimprägnierung eines AEROSIL-Trägers mit Palladium gemäß der Erfindung

Es sollten 1 kg eines Festbett-Katalysator-Trägers aus pyrogenem SiO₂ (AEROSIL 200 von Degussa) mit einem Porenvolumen von 0,76 ml/g und einer spezifischen Oberfläche von 176 m²/g) mit Palladium in einer Schalendicke von 0,6 mm imprägniert werden. Die Katalysatorträger lagen in Form von Zylindern mit verrundeten Stirnflächen vor (Abmessungen: 5,5 mm Höhe, 6 mm Durchmesser). Als Imprägnierlösung wurde eine wäßrige Palladiumchloridlösung gewählt.

Das Schalenvolumen berechnet sich unter Verwendung der obigen Zahlenwerte aus einfachen geometrischen Überlegungen zu etwa 50 % des Gesamtvolumens der Katalysatorträger. Das im Schalenvolumen enthaltene Porenvolumen von 1 kg Katalysatorträgern beträgt somit 380 ml. In Vorversuchen wurde als optimale Lösungsmittelmenge 170 ml ermittelt, entsprechend 45 % des Schalenvolumens. Für die Imprägnierung der Katalysatorträger mit 1 Gew.-% Palladium wurde daher eine wäßrige Palladiumchloridlösung von 170 ml mit einem Gehalt von 10 g Palladium hergestellt.

Die Katalysatorträger wurden in der oben beschriebenen Apparatur imprägniert. Die Sprühzeit für die vorgelegte Menge von 170 ml Palladiumchloridlösung betrug 45 Min. Pro Umdrehung der Imprägnierkessel wurden nur etwa 0,1 % der Imprägnierlösung versprüht.

Nach der Imprägnierung wurden diese Katalysatorvorstufen 2 h bei 115° C in bewegter Schüttung getrocknet und 1 h im H₂/N₂-Strom (95 % N₂ / 5 % H₂) bei 400° C reduziert.

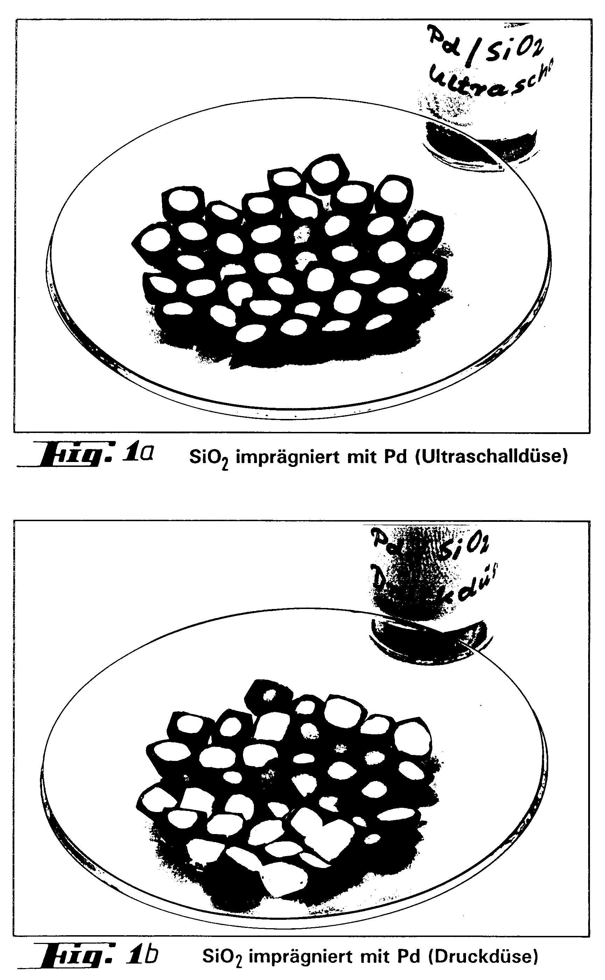

Querschliffe der so erhaltenen Katalysatoren sind in Figur 1a dargestellt. Die Querschliffe zeigen eine sehr regelmäßige palladiumhaltige Schale mit einer Dicke von 0,6 bis 0,7 mm.

### Vergleichsbeispiel 1: Schalenimprägnierung eines AEROSIL-Trägers mit Palladium gemäß dem Stand der Technik

Das Vergleichsbeispiel 1 wurde analog dem Beispiel 1 durchgeführt, jedoch wurde die Palladiumchloridlösung diesmal mit einer konventionellen Druckdüse (Polypropylen, Durchmesser der Bohrung 0,8 mm) besprüht. Die gesamte Sprühzeit betrug 95 Sekunden.

Querschliffe der so hergestellten Katalysatoren sind in Figur 1b dargestellt. Die Dicke der Schalen beträgt zwischen 0 (also edelmetallfrei) und 3 mm (also homogen durchimprägnierte Katalysatorträger).

### Beispiel 2: Schalenimprägnierung eines AEROSIL-Trägers mit Platin gemäß der Erfindung

Beispiel 2 wurde ganz analog zu Beispiel 1 durchgeführt, jedoch wurden diesmal 170 ml einer Platinchloridlösung mit einem Platingehalt von 10 g versprüht. Die Sprühzeit betrug 50 Minuten.

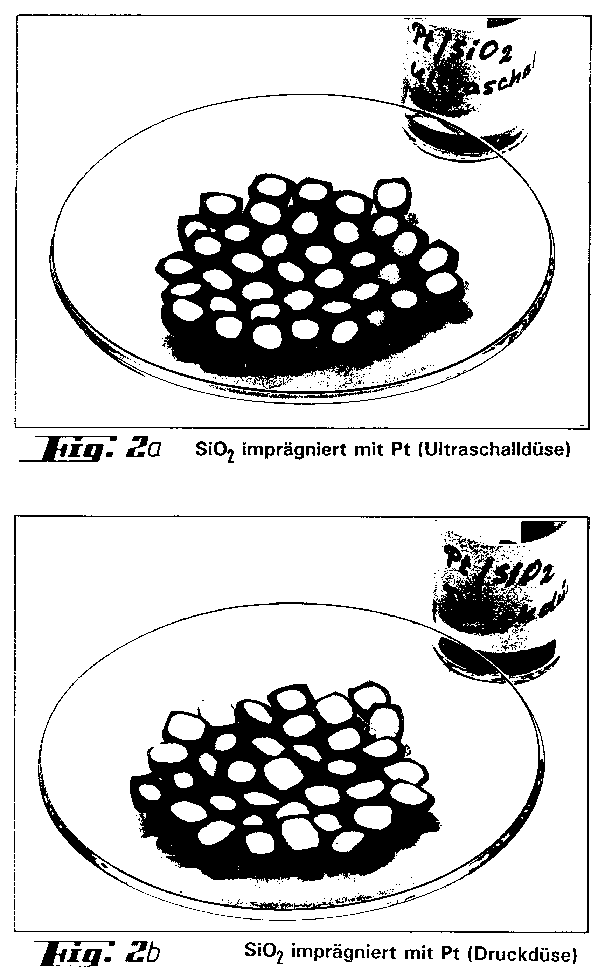

Querschliffe der so erhaltenen Katalysatoren sind in Figur 2a dargestellt. Die Querschliffe zeigen eine sehr regelmäßige platinhaltige Schale mit einer Dicke von 0,5 bis 0,6 mm.

### Vergleichsbeispiel 2: Schalenimprägnierung eines AEROSIL-Trägers mit Platin gemäß dem Stand der Technik

Das Vergleichsbeispiel 2 wurde analog dem Beispiel 2 durchgeführt, jedoch wurde die Platinchloridlösung diesmal mit einer konventionellen Druckdüse (Polypropylen, Durchmesser der Bohrung 0,8 mm) besprüht. Die gesamte Sprühzeit betrug 100 Sekunden.

Querschliffe der so hergestellten Katalysatoren sind in Figur 2b dargestellt. Die Dicke der Schalen beträgt zwischen 0 (edelmetallfrei) und 3 mm (homogen durchimprägnierte Katalysatorträger).

### Beispiel 3: Schalenimprägnierung eines AEROSIL-Trägers mit Nickel gemäß der Erfindung

Beispiel 3 wurde analog zu Beispiel 1 durchgeführt, jedoch wurden diesmal 170 ml einer Nickelchloridhexahydratlösung mit einem Nickelgehalt von 10 g versprüht. Die Sprühzeit betrug 48 Minuten.

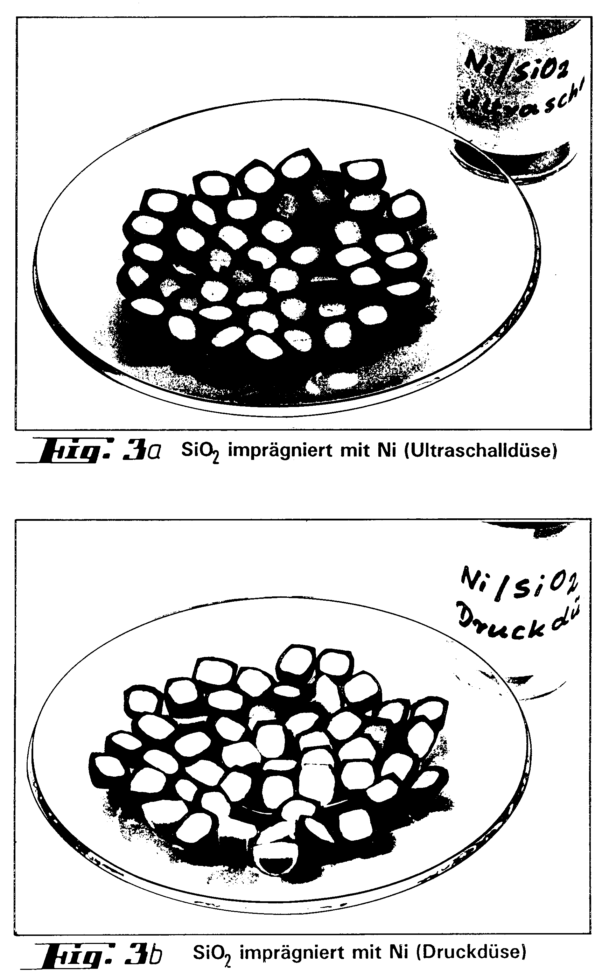

Querschliffe der so erhaltenen Katalysatoren sind in Figur 3a dargestellt. Die Querschliffe zeigen eine sehr regelmäßige nickelhaltige Schale mit einer Dicke von 0,5 bis 0,6 mm.

### Vergleichsbeispiel 3: Schalenimprägnierung eines AEROSIL-Trägers mit Nickel nach dem Stand der Technik

Das Vergleichsbeispiel 3 wurde analog dem Beispiel 3 durchgeführt, jedoch wurde die Nickelchloridhexahydratlösung diesmal mit einer konventionellen Druckdüse (Polypropylen, Durchmesser der Bohrung 0,8 mm) besprüht. Die gesamte Sprühzeit betrug 105 Sekunden.

Querschliffe der so hergestellten Katalysatoren sind in Figur 3b dargestellt. Die Dicke der Schalen beträgt zwischen 0 (metallfrei) und 3 mm (homogen durchimprägnierte Katalysatorträger).

Wie die beschriebenen Versuchsbeispiele zeigen, weisen die erfindungsgemäß imprägnierten Katalysatoren verglichen mit dem Stand der Technik eine extrem gleichmäßige, von Katalysatorkorn zu Katalysatorkorn reproduzierbare Edelmetallverteilung auf. Dies bezieht sich insbesondere auf die Dicke der mit Edelmetall imprägnierten Schale beim fertigen Katalysator.

Da aber bei Festbett-Katalysatoren die katalytischen Leistungsdaten wie Aktivität, Selektivität und Lebensdauer des Katalysators eng mit der Schalendicke korreliert sind, bedeutet dies eine von Korn zu Korn, aber auch von Produktionscharge zu Produktionscharge sehr gleichmäßige Qualität der hergestellten Katalysatoren. Somit kann gewährleistet werden, daß ein erfindungsgemäß hergestellter Katalysator bezüglich der erwähnten Leistungsdaten stets optimal an die von ihm katalysierte chemische Reaktion angepaßt werden kann und daher eine optimale Ausnutzung des katalytisch aktiven Materials in der Reaktion erfolgen kann.

## Patentansprüche

1. Verfahren zur gleichmäßigen und reproduzierbaren Schalenimprägnierung von als Schüttgut vorliegenden Festbett-Katalysatorträgern mit einem vorgebbaren Schalenvolumen durch Aufbringen von in Tröpfchen zerteilten Imprägnierlösungen von Vorstufen der katalytisch aktiven Komponenten auf die in einem Kessel umgewälzten Katalysatorträger,
**dadurch gekennzeichnet**,
daß die für die gewünschte Beladung der Katalysatorträger benötigte Menge an Vorstufen der katalytisch aktiven Komponenten in einem Volumen des Lösungsmittels gelöst werden, das 30 bis 100 % der Lösungsmittel-Aufnahmekapazität entspricht, welches von dem vorgegebenen Schalenvolumen zur Verfügung gestellt wird und daß 0,01 bis 2 % dieser Imprägnierlösung pro Umdrehung des Kessels in Tröpfchen mit einem mittleren Durchmesser von 10 bis 90 µm, bevorzugt 10 - 30 µm, zerteilt, drucklos und ohne Trägergas über mindestens 10 % der Oberfläche des Schüttgutes aufgebracht werden.

2. Verfahren nach Anspruch 1,
**dadurch gekennzeichnet**,
daß mindestens 60, bevorzugt 80 %, des gesamten Volumenstroms der versprühten Imprägnierlösung sich auf Tröpfchen mit Durchmessern kleiner als das Doppelte des mittleren Tropfendurchmessers verteilen.

3. Verfahren nach Anspruch 1 oder 2,
**dadurch gekennzeichnet**,
daß die Vorstufen der katalytisch aktiven Komponenten nach dem Sprühvorgang auf den Katalysatorträgern durch Trocknung und gegebenenfalls Reduktion fixiert werden.

4. Verfahren nach den Ansprüchen 1 bis 3,
**dadurch gekennzeichnet**,
daß es sich bei der Imprägnierlösung um eine wäßrige oder organische Lösung der Vorstufen der katalytisch aktiven Komponenten handelt.

5. Verfahren nach einem der vorstehenden Ansprüche,
**dadurch gekennzeichnet**,
daß die Imprägnierung unter einer gesättigten Atmosphäre des Lösungsmittels durchgeführt wird.

6. Verfahren nach einem der vorstehenden Ansprüche,
**dadurch gekennzeichnet**,
daß die Zerteilung der Imprägnierlösung in kleine Tröpfchen mit Hilfe einer Ultraschall-Düse vorgenommen wird.

7. Vorrichtung zur Durchführung des Verfahrens nach den vorstehenden Ansprüchen enthaltend ein drehbares Mischgefäß mit Drehzahlregelung zur Aufnahme und Umwälzen des als Schüttgut vorliegeden Trägermaterials, wobei das Mischgefäß sich in einer gasdicht abschließbaren Ummantelung befindet oder selbst gasdicht verschließbar ist; eine oder mehrere Ultraschall-Sprühdüsen, deren Sprühwinkel und Abstand relativ zur Oberfläche des umwälzenden Schüttgutes einstellbar sind; Mittel zum Temperieren des Schüttgutes und der sich in der Apparatur einstellenden gesättigten Lösungsmittel-Atmosphäre in einem Temperaturbereich zwischen 10° und 250° C durch beheizte oder gekühlte Flüssigkeitskrelsläufe, Temperaturmeßfühler und Temperaturregelkreise; temperierte Zuführungen für die Imprägnierlösungen zu den Ultraschallsprühdüsen; Durchflußregler zur Regelung des Massenstromes der Imprägnierlösung und verschließbare Gaszuführungen für Spülgase.

8. Vorrichtung nach Anspruch 7,
**dadurch gekennzeichnet**,
daß die Apparatur aus gegenüber den Imprägnierlösungen korrosionsfestem Material gefertigt ist oder mit einer korrosionsfesten Beschichtung versehen ist.
